# EUROPÄISCHE PATENTSCHRIFT

(11) **EP 0 798 315 B1**
(45) Veröffentlichungstag und Bekanntmachung des Hinweises auf die Patenterteilung: **29.10.1997**
(21) Anmeldenummer: 96104295.9
(22) Anmeldetag: 19.03.1996
(51) Int. Cl.: C08F 10/00, C08F 4/642, C08F 4/643

(54) **Verfahren zur Herstellung von hochaktiven, stabilen Metallocen-Katalysatorsystemen und gemäss diesem Verfahren hergestellte Formulierungen**
Process for preparing highly active, stable metallocene catalyst systems, and catalyst compositions prepared according therewith
Procédé pour la préparation de systèmes catalytiques à base de métallocènes, à haute activité et très stabiles, et compositions catalytiques préparés selon ce procédé

(43) Veröffentlichungstag der Anmeldung: 01.10.1997
(73) Patentinhaber: Witco GmbH, 59192 Bergkamen (DE)
(72) Erfinder: Rieger, Rainer, Dr., 44534 Lünen (DE); Volland, Hans-Günter, 59425 Unna (DE); Uzick, Wolfram, Dr., 59239 Schwerte (DE)

(56) Entgegenhaltungen:
- EP-A- 0 313 386
- EP-A- 0 557 718
- WO-A-91/03500
- US-A- 5 393 851

## Beschreibung

Metallocen-Katalysatorsysteme gewinnen zunehmend an Bedeutung als neue Generation von Katalysatorsystemen zur Herstellung von Polyolefinen ("Single Site Catalysts"). Diese neuen Katalysatoren bestehen im wesentlichen, wie bereits aus der klassischen Ziegler-Natta-Katalyse bekannt, aus einer Übergangsmetallverbindung als Katalysator sowie einer Co-Katalysator-Komponente, beispielsweise einem Alkylaluminoxan, insbesondere Methylaluminoxan. Als Übergangsmetallverbindung werden bevorzugt Cyclopentadienyl-, Indenyl- oder Fluorenylderivate der Gruppe IVa des Periodensystems der Elemente eingesetzt. Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüberhinaus den Zugang zu bislang unbekannten Polymerstrukturen mit vielversprechenden Eigenschaften im Hinblick auf technische Anwendungen.

In der Literatur ist eine Vielzahl von Publikationen erschienen, die die Herstellung spezieller Polyolefine mit solchen Katalysatorsystemen zum Gegenstand haben. Nachteilig in fast allen Fällen ist jedoch die Tatsache, daß zur Erzielung akzeptabler Produktivitäten ein hoher Überschuß an Alkylaluminoxanen, bezogen auf die Übergangsmetallkomponente, erforderlich ist (üblicherweise beträgt das Verhältnis Aluminium in Form des Alkylaluminoxans zu Übergangsmetall ca. 1000 : 1). Durch den hohen Preis der Alkylaluminoxane einerseits und durch in manchen Fällen erforderliche zusätzliche Polymer-Aufarbeitungsschritte ("deashing steps") andererseits wäre eine Polymerproduktion in technischem Maßstab auf Basis solcher Katalysatorsysteme vielfach unwirtschaftlich. Hinzu kommt, daß das für die Formulierung von Alkylaluminoxanen, insbesondere Methylaluminoxan, vielfach verwendete Lösungsmittel Toluol aus Gründen der Lagerstabilität hochkonzentrierter Formulierungen (starke Tendenz zur Gelbildung der Aluminoxanlösungen) sowie im Hinblick auf den Anwendungsbereich der letztendlich resultierenden Polyolefine aus toxikologischen Gründen zunehmend unerwünscht ist.

Bei diesen Katalysatorsystemen oder deren Formulierungen handelt es sich um sehr empfindliche Substanzen, die innerhalb weniger Stunden oder Tage Einbußen an Polymerisationsaktivität erleiden.

Durch den hohen Preis dieser modernen Katalysatorsysteme sind solche Aktivitätseinbußen nicht hinnehmbar. Aus wirtschaftlichen Gründen bestand daher ein Bedarf an Katalysatoren bzw. Katalysatorsystemen, welche nach der Herstellung über einen längeren Zeitraum hochaktiv verbleiben oder sogar an Aktivität gewinnen.

Gemäß WO 93/23439 soll die Stabilität von Metallocen-Katalysatorsystemen durch umfangreiche Variation der Darstellungsbedingungen, insbesondere Temperaturbehandlung, erreicht werden.

Diese Verfahrensweise ist einerseits aufwendig, andererseits wegen der Empfindlichkeit der Systeme nicht allgemein anwendbar.

Die US-A-5 393 851 beschreibt die Darstellung des metallocenbasierten Katalysatorsystems direkt im Lösungsmittel: der Metallocenkatalysator wird in einer konzentrierten Lösung eines Aluminoxans in einem Lösungsmittel gelöst. Diese Lösung muß in Abwesenheit von Sauerstoff und Wasser bei Temperaturen im Bereich von -4 bis +29 °C gelagert werden. Unter diesen Bedingungen nimmt die Aktivität des Katalysators ab.

Die EP-A-0 557 718 beschreibt die Darstellung von heterogenen Katalysatoren für die Olefinpolymerisation, wobei in aliphatischen und aromatischen Lösungsmitteln unlösliche Aluminoxane in einem inerten Dieselöl suspendiert und anschließend mit einer Lösung von Metallocenen in aromatischen Lösungsmitteln umgesetzt werden. Die Aktivität dieser Katalysatoren verringert sich ebenfalls innerhalb von Stunden.

In der WO-A-91/03500 wird die Darstellung von metallocenbasierten Katalysatorsystemen direkt im aromatischen Lösungsmittel beschrieben: Das Metallocen wird zu einer Lösung von MAO in Toluol gegeben.

Gemäß EP-A-0 313 386 werden zur Herstellung der geträgerten Katalysatorsysteme in erster Stufe Methylaluminoxane in Toluol gelöst und auf einem Träger fixiert und danach mit einer Metallocen-Lösung kontaktiert. Die Aktivität dieses Katalysators verringert sich ebenfalls innerhalb von Stunden.

Aufgabe der vorliegenden Erfindung war es daher, diese Nachteile zu überwinden und homogene Formulierungen von metallocenbasierten Katalysatorsystemen zu entwickeln, welche über einen langen Zeitraum ihre hohe Polymerisationsaktivität zumindest beibehalten.

Überraschenderweise wurde nun gefunden, daß sich die Polymerisationsaktivität von Metallocenkatalysatorsystemen in Form von Paraffin enthaltenden flüssigen oder festen Formulierungen dauerhaft stabilisieren läßt. Die Definition Formulierung umfaßt daher Katalysatorsysteme in hochsiedenden Kohlenwasserstoffen (Paraffinen) von bei Raumtemperatur öliger oder wachsartiger Konsistenz, in denen die Komponenten mittels geeigneter Mischeinrichtungen gelöst, suspendiert oder dispergiert werden.

Ein Gegenstand der Erfindung ist daher ein Verfahren zur Herstellung homogener Mischungen, bestehend im wesentlichen aus mindestens einem Metallocen, mindestens einem Co-Katalysator und Formulierungsmedien, wobei die Darstellung der Katalysatorsysteme, bestehend aus Metallocen- und Co-Katalysatorkomponente,
A) nach an sich bekannten Verfahren direkt im verwendeten Kohlenwasserstoff erfolgt oder
B) die isolierten metallocenbasierten Katalysatorkomponenten im verwendeten Kohlenwasserstoff suspendiert bzw. dispergiert oder gelöst werden oder
C) die nach bekannten Verfahren hergestellte Lösung der metallocenbasierten Katalysatorkomponente in niedrigsiedendem Lösungsmittel in erster Stufe in den erfindungsgemäß mitverwendeten Kohlenwasserstoffen eingebracht wird und in zweiter Stufe das niedrigsiedende Lösungsmittel entfernt wird, gegebenenfalls unter Mitverwendung von
D) üblichen anorganischen oder organischen Trägermaterialien, Hilfsstoffen und/oder Additiven sowie Zusatzstoffen.

Ein weiterer Gegenstand der Erfindung sind die gemäß dem erfindungsgemäßen Verfahren hergestellten Formulierungen.

Weitere Gegenstände der Erfindung sind durch die Ansprüche gekennzeichnet.

Die erfindungsgemäß mitverwendeten Formulierungsmedien sind alle natürlichen oder synthetischen handelsüblichen, langkettigen, gegebenenfalls verzweigten flüssigen oder festen Kohlenwasserstoffe mit Siedepunkten über 150 °C, vorzugsweise über 200 °C, und Viskositäten von mindestens 1 Pa.s bei 25 °C.

Zu diesen Verbindungen gehören die Produktgruppen der sogenannten Weißöle, z. B. Witco White Mineral Oil Parol (Warenzeichen der Witco Polymers + Resins B. V., Niederlande), Vaseline sowie paraffinische Wachse z. B. Terhell, (Fa. Schümann).

Der mitverwendete Kohlenwasserstoff ist unabhängig von der metallorganischen Verbindung und richtet sich in erster Linie nach den Anforderungen der Praxis hinsichtlich der späteren Verwendung.

Als erfindungsgemäß mitverwendete Co-Katalysatoren werden Verbindungen der Elemente der Gruppen II A, III A, IV A des Periodensystems der Elemente, vorzugsweise aluminiumorganische, bororganische oder magnesiumorganische Substanzen allein oder in Mischungen oder als Komplexsalz eingesetzt wie beispielsweise R¹R²R³Al, R¹R²R³B^{,} R¹R²Mg, worin R¹, R²,R^{3,} gegebenenfalls unabhängig voneinander oder Heteroatome sind, z. B.: Tributylaluminium, Triisobutylaluminium, Trihexylaluminium, Trioctylaluminium, Diethylaluminiumchlorid, Ethylaluminiumsesquichlorid, Ethylaluminiumdichlorid, Diisobutylaluminiumchlorid, Isobutylaluminiumdichlorid, Diethylaluminiumjodid, Diisobutylaluminiumhydrid, Diethylaluminiumethoxid, Isoprenylaluminium, Dimethylaluminiumchlorid, Methylaluminoxan, Methylaluminiumsesquichlorid, Tetraisobutyldialuminoxan, Trimethylaluminium, und/oder Triethylaluminium vorzugsweise in Mischungen mit mindestens einer der genannten Verbindungen Diethylaluminiumhydrid, Hexaisobutyltetraaluminoxan, Diethyl(dimethylethylsilanolato)-aluminium, Diethyl(ethylmethylsilanolato)-aluminium, Diisobutyl(methylsilanolato)-aluminium, Tridodecylaluminium, Tripropylaluminium, Dipropylaluminiumchlorid, Dibutylmagnesium, Butylethylmagnesium, Butyloctylmagnesium, Butyloctylmagnesiumethoxid, Ethylaluminiumpropoxychlorid, Triethylbor, Tris[pentafluorophenyl]-boran und dessen Salze.

Als Katalysatorkomponente können Metallocenverbindungen wie in EP-A-0 480 390, EP-A-0 413 326, EP-A-0 530 908, EP-A-0 344 887, EP-A-0 420 436, EP-A-0 416 815, EP-A-0 520 732 beschrieben mitverwendet werden.

Dies sind insbesondere Verbindungen der allgemeinen Formel (1)

Q(CpRa) (Cp'R'a')M(X)ₙ (1)

worin
- Cp =: ein Cyclopentadienyl-, ein Indenyl-, ein Fluorenylrest
- R, R' =: gleich oder verschieden Alkyl-, Phosphin-, Amin-, Alkylether- oder Aryl-ethergruppen mit 0 ≤a ≤4, 0 ≤a'≤4
- Cp' =: eine der Gruppen Cp oder
- Cp' =: -NR"- mit R" = Alkyl- oder Arylrest mit a = 1 und
- Q =: eine ein- oder mehrgliedrige Brücke 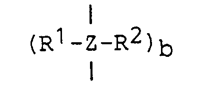 zwischen Cp und Cp' ist, worin R¹ und R² gleich oder verschieden ein Wasserstoffatom, eine C₁-C₁₀-Alkylgruppe, eine C₆-C₁₀-Arylgruppe und Z Kohlenstoff, Silizium oder Germanium bedeutet mit b = 0,1, 2 oder 3
- M =: ein Übergangsmetall der Gruppen 3 bis 6 (IUPAC Notation), insbesondere Zr, Hf ist
- X =: Halogen, insbesondere Cl, Br ist und
- n =: der Oxidationszahl von M, vermindert um 2, entspricht.

Als verbrückte Liganden - Q(CpRa)(Cp'R'a') in der allgemeinen Formel (1) - können insbesondere nachfolgende Verbindungen mitverwendet werden:
Dimethylsilyl-bis(1-inden), Dimethylsilyl-bis(1-cyclopentadien), 2,2-Propyl-bis(1-inden), 2,2-Propyl-bis(trimethylcyclopentadien), 2,2-Propyl-bis(5-dimethylamino-1-inden), 2,2-Propyl-bis(6-dipropylamino-1-inden), 2,2-Propyl-bis(4,7-bis(dimethyl-amino-1-inden), 2,2-Propyl-bis(5-diphenylphosphino-1-inden), 2,2-Propyl-bis(4,5,6,7-tetrahydro-1-inden), 2,2-Propyl-bis(4-methyl-1-inden), 2,2-Propyl-bis(5-methyl-1inden), 2,2-Propyl-bis(6-methyl-1-inden), 2.,2-Propyl-bis(7-methyl-1-Lnden), 2,2-Propyl-bis(5-methoxy-1-inden), 2,2-Propyl-bis(4,7-dimethoxy-1-inden), 2,2-Propyl-bis(2,3-dimethyl-1-inden), 2,2-Propyl-bis(4,7-dimethyl-1-inden), 2,2-Propyl-bis(1 -cyclopentadien), 2,2-Propyl-bis(1-inden), Diphenylmethyl-bis(1-inden), Diphenylmethyl-bis(1-cyclopentadien), Diphenylmethyl-bis(1-inden), Diphenylsilyl-bis(1-inden), Diphenylsilyl-bis(1-cyclopentadien), Diphenylsilyl-bis(1-inden), Ethylen-bis(1-inden), Ethylen-bis(trimethylcyclopentadien), Ethylen-bis(5-dimethylamino-1-inden), Ethylen-bis(6-dipropylamino-1-inden), Ethylen-bis(4,7-bis(dimethylamino)-1-inden), Ethylen-bis(5-diphenylphosphino-1-inden), Ethylen-bis(4,5,6,7-tetra-hydro-1-inden), Ethylen-bis(6-methyl-1-inden), Ethylen-bis(7-methyl-1-inden), Ethylen-bis(5-methoxy-1-inden), Ethylen-bis(4,7-dimethoxy-1-inden), Ethylen-bis(2,3-dimethyl-1-inden), Ethylen-bis(4,7-dimethyl-1-inden), Ethylen-bis(9-fluoren), Ethylen-bis(1-cyclopentadien), Ethylen-bis(1-inden). Als unverbrückte Liganden (Formel (1) mit b = 0) können vorzugsweise folgende Verbindungen mitverwendet werden: Cyclopentadien, Fluoren, Inden sowie deren mono- oder mehrfach alkylierten Derivate, wobei der Alkylrest 1 - 10 C-Atome aufweisen kann. Erfindungsgemäß werden bevorzugt [Bis(cyclopentadienyl)]zirkoniumdichlorid, [Bis (methylcyclopentadienyl)]zirkoniumdichlorid, [Bis(n-propylcyclopentadienyl)]zirkoniumdichlorid, [Bis(iso-butylcyclopentadienyl)]zirkoniumdichlorid, [Bis (cyclopentylcyclopentadienyl)]zirkoniumdichlorid, [Bis(benzylcyclopentadienyl)]zirkoniumdichlorid, [Bis(octadecylcyclopentadienyl)]-zirkoniumdichlorid, [Bis(n-butylcyclopentadienyl)]titaniumdichlorid, [Bis(n-butylcyclopentadienyl)]zirkoniumdichlorid, [Bis(n-butylcyclopentadienyl)]hafniumdichlorid, [Bis(indenyl)]zirkoniumdichlorid, [Bis (indenyl)]zirkoniumdimethyl, [Bis(tetrahydro-indenyl)]zirkoniumdichlorid, [1,2-Ethylen-bis(indenyl)]zirkoniumdichlorid, [1,2-Ethylen-bis-(indenyl)]hafniumdichlorid, [1,2-Ethylen-bis-(tetrahydroindenyl)zirkoniumdichlorid, [Dimethylsilyl-bis(1H-inden-1-yl)]zirkoniumdichlorid, [Dimethylsilyl-bis(1H-inden-1-yl)]-hafniumdichlorid.

Als erfindungsgemäß mitverwendbare anorganische Trägermaterialien werden poröse Oxide eines oder mehrerer der Elemente der Gruppen IIA, IIIA oder IVA des Periodensystems der Elemente wie ZrO₂, TiO₂, B₂O₃, CaO, ZnO, BaO, vorzugsweise Alumosilicate (Zeolithe) Al₂O₃ und MgO und insbesondere SiO₂, eingesetzt (DE 44 09 249).

Als erfindungsgemäß mitverwendbare organische Trägermaterialien beispielsweise kommen poröse, teilweise polymere Verbindungen wie Polyethylen, Polypropylen, Polystyrol, Zuckerderivate (Stärke, Amylose, Cyclodextrine) in Betracht.

Zur Darstellung der erfindungsgemäßen Formulierungen entsprechend dem erfindungsgemäßen Verfahren bestehen grundsätzlich verschiedene Möglichkeiten, z. B.:
M1) Darstellung der metallocenbasierten Katalysatorsysteme in dem erfindungsgemäßen Dispergier-/Suspendiermedium oder Lösungsmittel (Paraffin)
M2) Lösen, Suspendieren oder Dispergieren von isolierten metallocenbasierten Katalysatorkomponenten in dem erfindungsgemäßen Dispergier-/Suspendiermedium oder Lösungsmittel (Paraffin)
M3) Vermischen von nichtaromatischen Lösungs- oder Dispergiermitteln mit Lösungen der metallocenbasierten Katalysatorkomponenten und nachfolgender destillativer Abtrennung des Lösungsmittels unter Zurückbleiben der erfindungsgemäßen Lösungen, Suspensionen oder Dispersionen.

Zur Darstellung der Formulierungen können die Katalysatorkomponenten in reiner als auch in geträgerter Form auf einem geeigneten Trägermaterial eingesetzt werden. Werden die Katalysatorkomponenten in reiner Form eingesetzt, können das Trägermaterial sowie Hilfsstoffe, Additive und Zusatzstoffe zu einem beliebigen Zeitpunkt der Verfahrensmöglichkeiten M1) - M3) zugesetzt werden.

Die folgenden Beispiele illustrieren die Synthese der beanspruchten Metallocen-Katalysatorsysteme sowie die Abprüfung in der Polymerisation.

### Synthesebeispiele:

### Beispiel 1

### Methylaluminoxan in Witco Parol® (Warenzeichen der Witco Niederlande)

In einem mit Thermometer und randgängigem Rührer versehenen 1 L Kolben wurden unter Stickstoffschutzgasatmosphäre 402 g toluenische MAO-Lösung (Al ges. 13,2 %; Al als TMA 3,19 %) und 219 g Witco Parol® vorgelegt. In einem Ölbad wurde der Kolbeninhalt auf maximal 32 °C erwärmt und Vakuum angelegt. Das abdestillierte Toluen wurde in einer Tiefkühlfalle kondensiert. Mit abnehmenden Toluengehalt der Suspension konnte das Vakuum verstärkt werden. Toluen-Reste wurden während 3 H bei <1 mbar abdestilliert.

Man erhielt eine viskose und milchig trübe Suspension. Die Suspension war weder pyrophor noch selbstentzündlich; mit Wasser erfolgte leichte Gasentwicklung.

| | |
|---|---|
| Al gesamt | 13,4 % |
| Al als TMA | 1,5 % |

### Beispiel 2

### Methylaluminoxan in Witco Petroleum Jelly Snowwhite MD® (Vaseline, Witco Niederlande)

Unter Stickstoffschutzgasatmosphäre wurden in einem mit einem Rührer versehenen 500 ml Schlenk-Rohr 130,1 g toluenische MAO-Lösung (Al ges. 13,2 %, Al als TMA 3,19 %) und 85,1 g White Petroleum Jelly Snowwhite MD® vorgelegt. Nach Erwärmen auf 55 - 60 °C in einem Ölbad wurde das Gemisch homogen. Im Vakuum wurde das Toluen abdestilliert und in einer Tiefkühlfalle kondensiert. Das Vakuum wurde kontinuierlich auf unter 1 mbar gesteigert und die Badtemperatur bei maximal 65 °C gehalten. Nach vollständigem Entfernen des Toluen wurde eine farblose, homogene wachsartige Masse erhalten, die ab ca. 60 °C fließfähig war.

Die Suspension war weder pyrophor noch selbstentzündlich; mit Wasser erfolgte leichte Gasentwicklung.

| | |
|---|---|
| Al gesamt | 12,0 % |
| Al als TMA | 1,9 % |

### Beispiel 3

### Methylaluminoxan in paraffinischem Wachs

33,5 g Methylaluminoxan (Feststoff) und 16,8 g Paraffin (Terhell 5605®, Fa. Schümann) wurden unter Stickstoff in einem Rundkolben mit randgängigem Rührer erwärmt. Bei einer Badtemperatur von 65 - 70 °C erhielt man eine trübe Schmelze. Man ließ die Schmelze unter Rühren erstarren und löste die Schmelze dann von der Kolbenwandung ab. Nach Abkühlen unter äußerer Kühlung mit Trockeneis ließ sich der Feststoff zu einem feinkörnigen, schüttfähigen Feststoff zerkleinern.

Das ca. 66 % MAO enthaltende Pulver war nicht pyrophor oder selbstentzündlich.

| | |
|---|---|
| Al gesamt | 26,1 % |
| Al als TMA | 3,5 % |

### Beispiel 14

### Methylaluminoxan in Witco Parol®

26,3 g eines feingepulverten MAO-Feststoffes (Al gesamt 39,2 %) wurden unter Argonschutzgasatmosphäre mit 7,3 g Weißöl Witco Parol® verrührt. Es wurde eine farblose wachsartige Masse erhalten.

Das ca. 78 % MAO enthaltende Pulver war nicht pyrophor oder selbstentzündlich und zeigte bei Kontakt mit Wasser nur gemäßigte Gasentwicklung. Auf feuchtem Filterpapier aufgebracht wurde Verkohlung ohne Selbstentzündung beobachtet.

| | |
|---|---|
| Al gesamt | 30,1 % |
| Al als TMA | 3,6 % |

### Beispiel 5

### Dispersion von Methylaluminoxan in Vaseline

Unter Stickstoffschutzgasatmosphäre wurden in einem mit einem Rührer versehenen 500 ml Schlenk-Rohr 120 g toluenische MAO-Lösung (Al ges. 13,2 %, Al als TMA 3,19 %) und 78,5 g Vaseline weiß DAB 10, VARH AB (Fa. Schümann) vorgelegt. Nach Erwärmen auf 55 - 60 °C in einem Ölbad wurde das Gemisch homogen. Im Vakuum wurde das Toluen abdestilliert und in einer Tiefkühlfalle kondensiert. Das Vakuum wurde kontinuierlich auf unter 1 mbar gesteigert und die Badtemperatur bei maximal 65 °C gehalten. Nach vollständigem Entfernen des Toluen wurde eine farblose, homogene Dispersion erhalten, die ab ca. 60 °C fließfähig war.

Die Suspension war weder pyrophor noch selbstentzündlich; mit Wasser erfolgte leichte Gasentwicklung.

| | |
|---|---|
| Al gesamt | 12,3 % |
| Al als TMA | 1,6 % |

### Beispiel 6

### Suspension von Methylaluminoxan und Metallocen in Weißöl

In einer Rührapparatur wurden unter Argonschutzgasatmosphäre 60,5 g einer toluenischen MAO-Lösung (AL-Gehalt 13,2 %, Al als TMA 3,19 %) vorgelegt. Zu dieser Lösung wurden 2,0 g EURECEN® 5036 (Warenzeichen der Witco GmbH, Bergkamen - 1,2-Ethylen-bis-(1-indenyl)zirkoniumdichlorid) zugegeben und 30 min gerührt. Zu dieser dunkelbraunen Lösung wurden 39 g Weißöl Witco Parol® zudosiert und auf 40 °C erwärmt. Im Vakuum wurde bei bis zu 0,1 mbar das Toluen abdestilliert und in einer Tiefkühlfalle kondensiert.

Er wurden 56,6 g einer braunen, wachsartigen Katalysatormasse erhalten.

Die Suspension war weder pyrophor noch selbstentzündlich; mit Wasser erfolgte leichte Gasentwicklung.

| | |
|---|---|
| Al gesamt. | 14,11 % |
| Zr: | 0,77 % |

### Beispiel 17

Durchführung wie Beispiel 6. Vor dem Einsatz in der Polymerisation wurde die Mischung einem 24stündigen Alterungsprozeß in Toluol unterworfen.

### Beispiel 18

Durchführung wie Beispiel 6. Vor dem Einsatz in der Polymerisation wurde die Mischung einem 48stündigen Alterungsprozeß in Toluol unterworfen.

### Beispiel 19

### Suspension von geträgertem MAO/Metallocen/Silica-Katalysatorsystem in Witco Parol®

Unter Argonschutzgasatmosphäre wurden in einem Rührgefäß 23 g geträgertes Katalysatorsystem (TA 02954, Forschungsprodukt der Fa. Witco GmbH; Al-Gehalt 23,9 %, Zr-Gehalt 1,1 %) mit 53,7 g Weißöl Witco Parol® verrührt. Es wurde eine dunkelbraue Suspension erhalten.

Die Suspension war weder pyrophor noch selbstentzündlich; mit Wasser erfolgte leichte Gasentwicklung.

| | |
|---|---|
| Al gesamt | 7,17 % |
| Zr gesamt | 0,33 % |

### Beispiel 10

### Metallocen/Methylaluminoxan/Silica Suspension in Weißöl

In einer für das Arbeiten unter Argon-Schutzgasatmosphäre geeigneten Apparatur mit Rührer, Thermometer, Rückflußkühler und Feststoff-Dosierung wurden 203,5 g einer 10 %igen Methylaluminoxan-Lösung in Toluen (Al-Gehalt 5,0 %) eingebracht.

18,8 g Silica (SYLOPOL 2104®, Fa. Grace mit 5 % Wassergehalt) wurden mit 1,5 g destilliertem Wasser ca. 10 min durchgeschüttelt, in die Feststoffdosierung gefüllt und langsam zu der gerührten Methylaluminoxan-Lösung gegeben. Unter Gasentwicklung (Methangas) stieg die Temperatur hierbei auf 65 °C. Man rührte nach beendeter Zugabe, bis wieder Raumtemperatur erreicht war und gab dann 2,44 g EURECEN® 5036 (Warenzeichen der Witco GmbH, Bergkamen - 1,2-Ethylen-bis-(1-indenyl)zirkoniumdichlorid) zu. Es wurde nun 1,5 h gerührt, wobei sich der Kolbeninhalt rotbraun färbte. Dann wurden 121,2 g Weißöl Witco Parol® zugegeben, um eine ca. 25 %ige Suspension zu erzielen.

Nun wurde bei maximal 45 °C und einem Vakuum von bis zu 0,1 mbar in 6 h das Toluen vollständig abdestilliert. Es wurde eine rotbraune, hochviskose Suspension erhalten.

Die Suspension war weder pyrophor noch selbstentzündlich; mit Wasser erfolgte leichte Gasentwicklung.

| | |
|---|---|
| Al gesamt | 5,25 % |
| Zr | 0,27 % |

### Beispiel 11

### Metallocen/Methylaluminoxan/Silica Suspension in Weißöl

Unter Stickstoff-Schutzgasatmosphäre wurden 52,4 g mit Methylaluminoxan geträgertes Silica (SYLOPOL® 2104) mit einem Aluminiumgehalt von 23,8 % vorgelegt und 3,14 g EURECEN® 5036 zugesetzt. Zu dieser Feststoffmischung wurden 111,1 g Weißöl Witco Parol® zugegeben und über einen Zeitraum von 2 h gerührt. Man erhielt eine viskose, curryfarbene 33 %ige Suspension.

Die Suspension war weder pyrophor noch selbstentzündlich; mit Wasser erfolgte leichte Gasentwicklung.

| | |
|---|---|
| Al gesamt | 7,48 % |
| Zr | 0,38 % |

### Vergleichsbeispiele

In den Vergleichsbeispielen 12, 13 und 14 wurde eine handelsübliche MAO-Lösung, welche von der Witco GmbH, Bergkamen unter dem Warenzeichen EURECEN® Al 5100/10T vertrieben wird, eingesetzt und zusammen mit den anderen Katalysatorkomponenten direkt in den Polymerisationsreaktor dosiert. Die Konzentrationen des aktiven Katalysatormaterials ergeben sich aus den Tabellen 1 und 2.

### Polymerisationsergebnisse:

**Tabelle 1**

| Polymerisationsergebnisse und analytische Daten zu homogenen Formulierungen | | | | |
|---|---|---|---|---|
| **Beispiel** | **Formulierung** | **%Al** | **%Zr** | **Produktivität [kg PE/mol Zr*h]** |
| | | **in Formulierung** | | |
| 1 | MAO in Parol ¹⁾ | 13,4; | 0,00 | 30552 |
| 2 | MAO in Petroleum Jelly¹⁾ | 12,0; | 0,00 | 29880 |
| 3 | MAO-Feststoff in Paraffin¹⁾ | 26,1; | 0,00 | 35256 |
| 4 | MAO in Parol¹⁾ | 30,1; | 0,00 | 55584 |
| 5 | MAO in Vaseline (Schümann)¹⁾ | 12,3; | 0,00 | 25704 |
| 6 | MAO/Metallocen²⁾ in Parol dargestellt und direkt polymerisiert | 14,11 | 0,77 | 3456 |
| 7 | MAO/Metallocen²⁾ in Parol dargestellt und nach 24 h polymerisiert | 14,11 | 0,77 | 29964 |
| 8 | MAO/Metallocen²⁾ in Parol dargestellt und nach 48 h polymerisiert | 14,11 | 0,77 | 57288 |
| 12 | MAO in Toluen (Vergleichsbeispiel)¹⁾ | 4,84; | 0,00 | 29328 |

| | | | | |
|---|---|---|---|---|
| (MAO: 900 g/mol; Metallocen abs. conc. 1,25*10⁻⁶ mol Zr; Al:Zr = 1000:1); 900 ml Toluen; 30°C Innentemperatur; 4 bar Ethen; 1000 UpM; 20 min) ¹⁾ = Bis [n-butylcyclopentadienyl]zirkoniumdichlorid | | | | |
| ²⁾ = Ethylen-1,2-bis[indenyl]zirkoniumdichlorid | | | | |

**Tabelle 2**

| Polymerisationsergebnisse und analytische Daten zu heterogenen Formulierungen | | | | |
|---|---|---|---|---|
| **Beispiel** | **Formulierung** | **% Al** | **% Zr** | **Produktivität [kg PE/mol Zr*h]** |
| 9 | MAO/SiO₂/Metallocen in Parol suspendiert²⁾ | 7,17 | 0,33 | 4200 |
| 10 | MAO/ SiO₂/Metallocen in Parol dargestellt²⁾ | 5,25 | 0,27 | 2228 |
| 11 | MAO/ SiO₂/Metallocen in Parol dargestellt²⁾ | 7,48 | 0,38 | 1081 |
| 14 | MAO/SiO₂/Metallocen in Toluen suspendiert (Vergleichsbeispiel)²⁾ | 5,25 | 0,27 | 688 |

| | | | | |
|---|---|---|---|---|
| (MAO/SiO₂ 23,8 % Al; Metallocen abs. conc. 1,25*10⁻⁶ mol Zr; Scavenger Tri-iso-butylaluminium (Al:Zr = 800:1); 900 ml Toluen; 40°C Innentemperatur; 4 bar Ethen; 1000 UpM; 20 min) ¹⁾ = Bis [n-butylcyclopentadienyl]zirkoniumdichlorid ²⁾ = Ethylen-1,2-bis[indenyl]zirkoniumdichlorid | | | | |

## Patentansprüche

1. Verfahren zur Herstellung homogener Mischungen, bestehend im wesentlichen aus mindestens einem Metallocen, mindestens einem Co-Katalysator und Dispergier-/Suspendiermedium oder Lösungsmittel wobei die homogene Mischung hergestellt wird durch
A) Darstellung der metallocenbasierten Katalysatorsysteme direkt in dem Dispergier-/Suspendiermedium oder Lösungsmitteln oder durch
B) Lösen, Suspendieren oder Dispergieren von isolierten metallocenbasierten Katalysatorkomponenten in dem Dispergier-/Suspendiermedium oder Lösungsmittel oder durch
C) Vermischen der nach bekannten Verfahren hergestellten Lösung der metallocenbasierten Katalysatorkomponente in niedrigsiedendem Lösungsmittel mit dem Dispergier-/Suspendiermedium oder Lösungsmittel in erster Stufe und nachfolgender destillativer Abtrennung des niedrigsiedendem Lösungsmittels, gegebenenfalls unter Mitverwendung von
D) üblichen organischen oder anorganischen Trägermaterialien, Hilfsstoffen und/oder Addition sowie Zusatzstoffen, dadurch gekennzeichnet, daß als Dispergier-/Suspendiermedium oder Lösungsmittel natürliche oder synthetische handelsübliche langkettige, gegebenenfalls verzweigte flüssige oder feste nichtaromatische Kohlenwasserstoffe mit Siedepunkten über 150 °C und Viskositäten von mindestens 1 Pa.s bei 25 °C, eingesetzt werden.

2. Verfahren gemäß Anspruch 1, dadurch gekennzeichnet, daß als Co-Katalysatoren aluminiumorganische Verbindungen eingesetzt werden.

3. Verfahren gemäß den Ansprüchen 1 und 2, dadurch gekennzeichnet, daß als Co-Katalysatoren Aluminoxane eingesetzt werden.

4. Verfahren gemäß Anspruch 1, dadurch gekennzeichnet, daß als Co-Katalysatoren bororganische Verbindungen eingesetzt werden.

5. Verfahren gemäß den Ansprüchen 2 und 3, dadurch gekennzeichnet, daß als Co-Katalysator Methylaluminoxan eingesetzt wird.

6. Verfahren gemäß Anspruch 1, dadurch gekennzeichnet, daß als Katalysatorkomponente ein oder mehrere Metallocene der allgemeinen Formel (1)
Q(CpRa) (Cp'R'a')M(x)ₙ (1)
worin
Cp = ein Cyclopentadienyl-, ein Indenyl-, ein Fluorenylrest
R, R'= gleich oder verschieden Alkyl-, Phosphin-, Amin-, Alkylether- oder Aryl-ethergruppen mit 0 ≤a≤4, 0 ≤a'≤4
Cp' = eine der Gruppen Cp oder
Cp' = -NR"- mit R" = Alkyl- oder Arylrest mit a = 1 und
Q = eine ein- oder mehrgliedrige Brücke 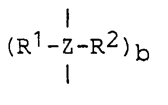 zwischen Cp und Cp' ist, worin R¹ und R² gleich oder verschieden ein Wasserstoffatom, eine C₁-C₁₀-Alkylgruppe, eine C₆-C₁₀-Arylgruppe und Z Kohlenstoff, Silizium oder Germanium bedeutet mit b = 0,1, 2 oder 3
M = ein Übergangsmetall der Gruppen 3 bis 6 (IUPAC Notation), insbesondere Zr, Hf ist
X = Halogen, insbesondere Cl, Br ist und
n = der Oxidationszahl von M, vermindert um 2, entspricht
mitverwendet werden.

7. Verfahren gemäß den Ansprüchen 1 und 6, dadurch gekennzeichnet, daß als Katalysatorkomponente ein oder mehrere Metallocene aus der Gruppe [Bis(cyclopentadienyl)]zirkoniumdichlorid, [Bis(methylcyclopentadienyl)]zirkoniumdichlorid, [Bis(n-propylcyclopentadienyl)]zirkoniumdichlorid, [Bis(iso-butylcyclopentadienyl)]zirkoniumdichlorid, [Bis(cyclopentylcyclopentadienyl)]zirkoniumdichlorid, Bis(benzylcyclopentadienyl)]zirkoniumdichlorid, [Bis(octadecylcyclopentadienyl)]zirkoniumdichlorid, [Bis(n-butylcyclopentadienyl)]titaniumdichlorid, [Bis(n-butylcyclopentadienyl)]zirkoniumdichlorid, [Bis(n-butyl-cyclopentadienyl)]hafniumdichlorid, [Bis(indenyl)]zirkoniumdichlorid, [Bis(indenyl)]zirkoniumdimethyl, [Bis-(tetrahydroindenyl)]zirkoniumdichlorid, [1,2-Ethylen-bis(indenyl)]zirkoniumdichlorid, [1,2-Ethylen-bis (indenyl)1hafniumdichlorid, [1,2-Ethylen-bis-(tetrahydroindenyl)zirkoniumdichlorid, [Dimethylsilyl-bis(1H-inden-1 -yl)]zirkoniumdichlorid, [Dimethylsilyl-bis(1H-inden-1-yl)]hafniumdichlorid mitverwendet werden.

8. Formulierung, hergestellt nach einem Verfahren gemäß Anspruch 1.

## Claims

1. Method of producing homogeneous mixtures consisting essentially of at least one metallocene, at least one co-catalyst, and dispersing/suspending media or solvents, wherein the homogeneous mixture is prepared by
A) preparing the metallocene-based catalyst systems directly in the dispersing/-suspending medium or solvents, or by
B) dissolving, suspending or dispersing isolated metallocene-based catalyst components in the dispersing/suspending medium or solvent, or by
C) mixing the solution of the metallocene-based catalyst component, prepared according to known methods, in a low-boiling solvent with the dispersing/suspending medium or solvent in a first step, and then removing the low-boiling solvent by distillation, optionally with the use of
D) customary organic or inorganic support materials, auxiliaries and/or additives as well as accessory agents,
characterised in that there are used as dispersing/suspending medium or solvent natural or synthetic, commercially available, long-chained, optionally branched, liquid or solid non-aromatic hydrocarbons having boiling points above 150°C and viscosities of at least 1 Pa.s at 25°C.

2. Method according to claim 1, characterised in that organoaluminium compounds are used as co-catalysts.

3. Method according to claims 1 and 2, characterised in that aluminoxanes are used as co-catalysts.

4. Method according to claim 1, characterised in that organoboron compounds are used as co-catalysts.

5. Method according to claims 2 and 3, characterised in that methylaluminoxane is used as co-catalyst.

6. Method according to claim 1, characterised in that there are used as catalyst component one or more metallocenes of the general formula (1):
Q(CpRa)(Cp'R'a')M(X)ₙ (1)
wherein
Cp is a cyclopentadienyl, indenyl or fluorenyl radical;
R and R' are the same or different and each is an alkyl, phosphine, amine, alkyl ether or aryl ether group with 0 ≤ a ≤ 4 and 0 ≤ a' ≤ 4;
Cp' is one of the groups Cp or
Cp' is -NR"- wherein R" is an alkyl or aryl radical with a = 1, and
Q is a single- or multi-membered bridge 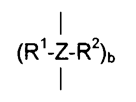 between Cp and Cp', wherein R¹ and R² are the same or different and each is a hydrogen atom, a C₁-C₁₀alkyl group or a C₆-C₁₀aryl group, Z denotes carbon, silicon or germanium, and b is 0, 1, 2 or 3,
M is a transition metal of groups 3 to 6 (IUPAC notation), especially Zr or Hf,
X is halogen, especially Cl or Br, and
n is the oxidation number of M, reduced by 2.

7. Method according to claims 1 and 6, characterised in that there is used as the catalyst component one or more metallocenes from the group [bis(cyclopentadienyl)]zirconium dichloride, [bis(methylcyclopentadienyl)]zirconium dichloride, [bis(n-propylcyclopentadienyl)]zirconium dichloride, [bis(isobutylcyclopentadienyl)]-zirconium dichloride, [bis(cyclopentylcyclopentadienyl)]zirconium dichloride, [bis-(benzylcyclopentadienyl)]zirconium dichloride, [bis(octadecylcyclopentadienyl)]-zirconium dichloride, [bis(n-butylcyclopentadienyl)]titanium dichloride, [bis(n-butylcyclopentadienyl)]zirconium dichloride, [bis(n-butylcyclopentadienyl)]hafnium dichloride, [bis(indenyl)]zirconium dichloride, [bis(indenyl)]zirconium dimethyl, ibis(tetrahydroindenyl)]zirconium dichloride, [1,2-ethylenebis(indenyl)]zirconium dichloride, [1,2-ethylenebis(indenyl)]hafnium dichloride, [1,2-ethylenebis(tetrahydroindenyl)]zirconium dichloride, [dimethylsilylbis(1H-inden-1-yl)]zirconium dichloride, and [dimethylsilylbis(1H-inden-1-yl)]hafnium dichloride.

8. Formulation produced by a method according to claim 1.

## Revendications

1. Procédé de préparation de mélanges homogènes constitués essentiellement d'au moins un métallocène, d'au moins un cocatalyseur et de milieux de dispersion/suspension ou de solvants, selon lequel on prépare le mélange homogène par
A) préparation des systèmes de catalyseurs à base de métallocènes directement dans le milieu de dispersion/suspension ou le solvant, ou par
B) mise en solution, suspension ou dispersion des constituants isolés du catalyseur à base de métallocène dans le milieu de dispersion/suspension ou dans le solvant, ou par
C) mélange, dans une première étape, de la solution des constituants du catalyseur à base de métallocène dans un solvant de bas point d'ébullition, préparée par des procédés connus, avec le milieu de dispersion/suspension ou le solvant, puis élimination du solvant de bas point d'ébullition par distillation, éventuellement en présence
D) de supports organiques ou inorganiques, de substances auxiliaires et/ou d'additifs et d'adjuvants classiques,
caractérisé en ce que, comme milieu de dispersion/suspension ou comme solvant, on utilise des hydrocarbures naturels ou synthétiques non aromatiques à longue chaîne éventuellement ramifiée, liquides ou solides, ayant des points d'ébullition supérieurs à 150°C et des viscosités d'au moins 1 Pa.s à 25°C, disponibles dans le commerce.

2. Procédé selon la revendication 1, caractérisé en ce que l'on utilise comme cocatalyseur des composés organiques de l'aluminium.

3. Procédé selon les revendications 1 et 2, caractérisé en ce que l'on utilise comme cocatalyseurs des aluminoxanes.

4. Procédé selon la revendication 1, caractérisé en ce que l'on utilise comme cocatalyseurs des composés organiques du bore.

5. Procédé selon les revendications 2 et 3, caractérisé en ce que l'on utilise comme cocatalyseur un méthylaluminoxane.

6. Procédé selon la revendication 1, caractérisé en ce que l'on utilise comme constituants du catalyseur un ou plusieurs métallocènes de formule générale (1)
Q(CpRa)(Cp'R'a')M(X)ₙ (1)
dans laquelle
Cp est un reste cyclopentadiényle, indényle ou fluorényle,
R, R' sont des groupes alkyle, phosphine, amine, alkyléther ou aryléther, identiques ou différents, avec 0 ≤ a ≤ 4 et 0 ≤ a' ≤ 4,
Cp' est l'un des groupes Cp ou
Cp' est -NR"-, où R" est un reste alkyle ou aryle, avec a =1 et
Q est un pont de un ou plusieurs chaînons 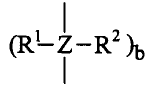 entre Cp et Cp', dans lequel R¹ et R² sont identiques ou différents et représentent un atome d'hydrogène, un groupe alkyle en C₁-C₁₀, ou un groupe aryle en C₆-C₁₀ et Z représente le carbone, le silicium ou le germanium, b étant égal à 0, 1, 2 ou 3,
M est un métal de transition des groupes 3 à 6 (nomenclature de l'UICPA), en particulier Zr ou Hf,
X est un halogène, en particulier Cl ou Br, et
n correspond au degré d'oxydation de M moins 2.

7. Procédé selon les revendications 1 et 6, caractérisé en ce que l'on utilise comme constituants du catalyseur un ou plusieurs métallocènes du groupe constitué par le dichlorure de bis(cyclopentadiényl)zirconium, le dichlorure de bis(méthylcyclopentadiényl)zirconium, le dichlorure de bis(n-propylcyclopentadiényl)zirconium, le dichlorure de bis(isobutylcyclopentadiényl)zirconium, le dichlorure de bis(cyclopentylcyclopentadiényl)zirconium, le dichlorure de bis(benzylcyclopentadiényl)zirconium, le dichlorure de bis(octadécylcyclopentadiényl)zirconium, le dichlorure de bis(n-butylcyclopentadiényl)titane, le dichlorure de bis(n-butylcyclopentadiényl)zirconium, le dichlorure de bis(n-butylcyclopentadiényl)hafnium, le dichlorure de bis(indényl)zirconium, le bis(indényl)-zirconiumdiméthyle, le dichlorure de bis(tétrahydroindényl)zirconium, le dichlorure de 1,2-éthylènebis(indényl)zirconium, le dichlorure de 1,2-éthylènebis-(indényl)hafnium, le dichlorure de 1,2-éthylènebis(tétrahydroindényl)zirconium, le dichlorure de diméthylsilylbis(1H-indène-1-yl)zirconium, le dichlorure de diméthylsilylbis(1H-indène-1-yl)hafnium.

8. Formulation préparée par un procédé selon la revendication 1.
